# EUROPEAN PATENT SPECIFICATION

(11) **EP 4 346 515 B1**
(45) Date of publication and mention of the grant of the patent: **23.04.2025**
(21) Application number: 22734375.3
(22) Date of filing: 20.05.2022
(51) Int. Cl.: A47G 19/18, G01F 11/02, G01F 11/32, G01F 11/38

(54) **DOSING APPARATUS FOR SEMISOLID OR PASTY FOODSTUFFS**
DOSIERVORRICHTUNG FÜR HALBFESTE ODER PASTÖSE NAHRUNGSMITTEL
APPAREIL DE DOSAGE POUR DES PRODUITS ALIMENTAIRES SEMI-SOLIDES OU PÂTEUX

(30) Priority: 24.05.2021 IT 202100013391
(43) Date of publication of application: 10.04.2024
(73) Proprietor: Pan Group S.r.l., 50012 Bagno a Ripoli (IT)
(72) Inventor: PAOLINI, Cristiano, 50025 Montespertoli (IT)
(74) Representative: Bottino, Giovanni
(86) International application number: PCT/IT2022/050133
(87) International publication number: WO 2022/249210

(56) References cited:
- WO-A1-90/06714
- DE-U1- 20 304 359
- GB-A- 800 472
- IT-A1- FI20 130 137
- IT-A1- FI20 140 138
- US-A- 3 738 543

## Description

The present invention relates to dosing apparatus for food use, and particularly relates to a dosing apparatus for semisolid or pasty foodstuffs.

This type of apparatus, which has been known for more than 60 years as reflected in document GB800472, bases its functionality on the fact the distribution chamber of the semisolid food product, includes a dispensing nozzle, access to which is interdicted until a piston, sliding in the chamber, compresses the dose of product that has been introduced into the chamber during the piston stroke in the opposite direction. The vacuum created by the piston allows the product to discharge from the tank in which it is contained toward the dispensing chamber, in an amount defined by the capacity of the dispensing chamber.

This type of apparatus over the past twenty years has attracted increasing interest in the restaurant industry as well as in the hotel and catering sector, since this allows for the supply of defined portions of product that would otherwise be difficult to dose, and greatly reduces the environmental impact associated with the disposal of single-serving packages, which for a very long time have been widely used in bars, restaurants, and hotels, but which are the source of waste with problematic recycling.

With this perspective of use in mind, it was necessary to develop apparatuses of the type described above that would allow easy maintenance and cleaning of the distribution chamber and piston, in contrast to what is evident from the previous document cited above.

Document IT1425692 describes a dispensing apparatus of the type previously outlined, and in accordance with the preamble of claim 1, in which the piston is actuated by an inter-resistant lever that interacts with the piston by means of a shaped lane formed in said lever and a pin slidingly inserted into said lane. Notably, the pin can be extracted from the lane formed in the lever by quick release means, so that disassembly for maintenance purposes is significantly easier than the state of the art. However, even this solution presents a rather complex structure, and disassembly, although achievable without the use of tools, is not exactly entirely comfortable.

The aim of the present invention is to provide a dosing apparatus for pasty foods that could combine the reliability and robustness of known types of apparatus with an improved structure, which brings advantages in both construction and maintenance.

Thus, it is an object of the present invention to provide a dosing apparatus for pasty foodstuffs, comprising a distribution chamber radially provided with a delivery nozzle, and a radial supply conduit of the pasty foodstuff upstream of said delivery nozzle, said nozzle being provided with closing means, and a piston, provided with actuating means, sliding in said distribution chamber from a position of at least partial opening of said delivery conduit to a position of complete closure thereof; the means of closure of said delivery nozzle being suitably loaded so as to permit delivery when the stroke of the piston is in the position of complete closure of said supply conduit; the means of movement of the piston comprising an inter-resistant lever, fulcrated to a support connected to the distribution chamber, and cooperating with the end of the piston opposite that facing the distribution chamber; the end of the piston cooperating by contact with a portion of the outer side wall of the lever suitably shaped, by suitable sliding means, and in which said distribution chamber is obtained longitudinally in an elongated monolithic body, separated by suitable sealing means from a second chamber, coaxial and concentric to the distribution chamber, in which the end of the piston cooperating with the lever slides, in said second chamber are provided two axially formed through slits facing each other, which are acting as guiding means of said lever, and being provided removable closing means of said second chamber.

The realization of the mechanical coupling of the piston to the lever without the need to connect the two parts to each other, on the one hand simplifies the maintenance of the device, and on the other hand greatly simplifies its construction, since it is significantly easier to form the outline of a plate than to shape a slot in it.

The lever preferably has the shape of an elongated plate; the portion of the side wall of the plate cooperating with the piston is formed on the thickness of said plate, basically in the shape of an arc of a circumference. The plate may be formed by two flaps inclined at an obtuse angle, cooperating with the piston in its concavity. The flap of said plate intended to be connected to the handle means is shorter than the flap intended to be connected to the fulcrum, which is connected to the distribution chamber support.

The second chamber preferably has a larger cross-section than the distribution chamber, so as to accommodate the means of elastic loading of the piston arranged concentrically to the same and attested on the shoulder between said two chambers. Advantageously, the means that enable the connection of the feed line to the pasty foodstuff tank allow the attachment of the monolithic body to the apparatus support, which consists of a sleeve complementary to the monolithic body and provided with a radial opening.

Further advantages and features of the dosing apparatus according to the present invention will be apparent from the following detailed description of an embodiment form of the same rendered, for illustrative and non-limiting purposes, with reference to the one accompanying table of drawings, in which:

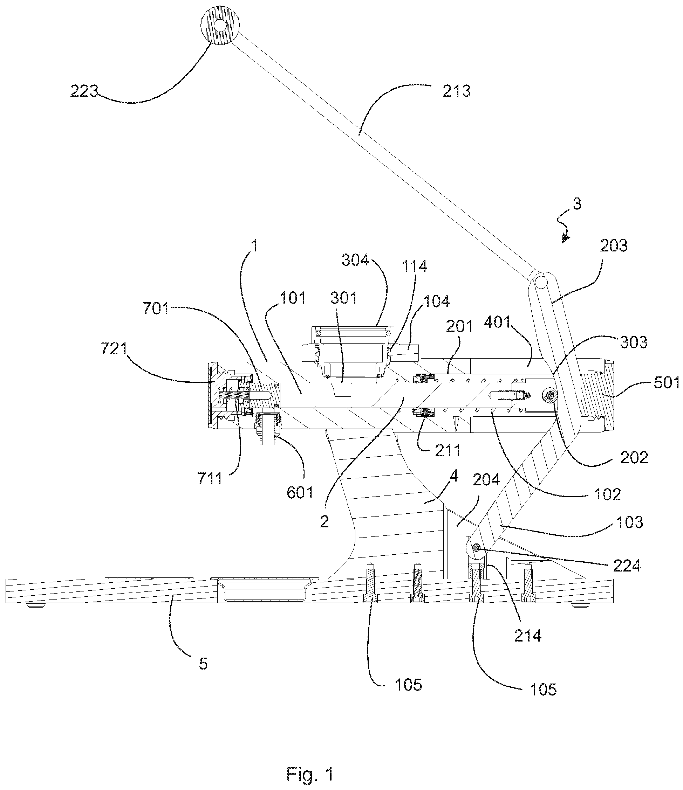

Figure 1 is a longitudinal sectional view of an embodiment of the dispensing apparatus according to the present invention.

In the figure, the numeral 1 designates a cylindrical body in which a dispensing chamber 101 is cut out, communicating with a radial conduit 301 for supplying the product to be dispensed, and intended for coupling with the reservoir (not shown in the figure), by means of the ring nut 304, which also allows the connection of body 1 with the sleeve 104 of support 4, fitting into hole 114 of said sleeve. On the chamber 101 also opens the dispensing nozzle 601, access to which is controlled by a shutter 701, provided with elastic loading means 711, and removable thanks to the cap 721. Inside chamber 101 is movable the end of a piston 2, which at its opposite end slides into chamber 201, separated from chamber 101 by sealing means 211, on which the spring 102 elastic loading means of piston 2 rests. The piston cooperates with the circumferentially arched portion 303 on the concave side profile of lever 3 by bearing 202; lever 3 is pivoted at the free end of the flap 103 to a pin 224 placed on pawl 214 attached to base 5 by screw 105. The free end of the other flap 203 of the lever 3 is connected to the handle 213 fitted with the grip sleeve 223. The lever 3 moves guided by the slots 401 formed through the wall of the body 1, and its travel is limited by the cap 501. The body 1 is surrounded by the sleeve 104, made of piece with the support 4, on the wall of which is made the opening 204 in which is placed the pawl 214 to which the lever 3 is oscillating coupled.

The operation and structure of the dispensing apparatus according to the present invention is as follows; in the position shown in Figure 1, the product to be dispensed can enter through conduit 301 into chamber 101. By moving the handle 203 downward, the lever 3 moves, pushing the piston 2 into the chamber 101, and the pressure generated by the piston allows the product to be dispensed from the nozzle 601, overcoming the resistance of the shutter 701. The piston 2 and lever 3 cooperate through the interaction between the contoured portion 303 of the peripheral edge of lever 3 and the bearing 202 pivoted on piston 2. Upon release of the handle 213 by the user, piston 2 is recalled by the spring 102, and lever 3 is pushed until it meets the plug 501 at the stop. At the same time, plug 701 closes access to nozzle 601, and consequently the vacuum created by the return movement of piston 2 allows access into chamber 101 of product to be dispensed through supply port 301.

Constructively, the dispensing apparatus according to the present invention appears to be very simple and compact. The monolithic body 1, in this case a tubular body preferably made of plexiglass, or similar materials suitable for food use, is attached to the quill 104 of the holder 4 by means of the ferrule 304, which mates with the same quill 104 and the conduit 301. The two slots 401 conveniently guide the movement of the lever, which can then cooperate by contact, without the need for mechanical coupling, with the piston 2. Chamber 201 has a larger cross-sectional area than distribution chamber 101, so that spring 102 of piston 2 can be positioned without having to reduce the cross-sectional area of the piston itself. It is noticeable how this type of constructive solution reduces the number of parts and organizes them in the most rational and maintenance-friendly way, especially when compared to the executive form illustrated and described in the earlier document IT1425692.

The lever is made as an obtuse angle plate, so as to minimize effort on the part of the user and better control the piston stroke. In addition, the lever so designed, together with its handle means, easily allows the operation of the device from the same side toward which the delivery means are facing, so as to make the user's operation more comfortable, able to better manage the delivery itself.

The fact that there is no need for a coupling by connection with the piston makes it easier to realize than the lever described in the state of the art. The flaps of the plate are of different lengths to each other, again with the aim of minimizing stresses, and in particular the circumference arc shaping 303 is placed predominantly on the flap 203 facing the handle 213. This shaping is made so as to achieve the most effective control of piston stroke 2, both in the delivery direction and in the direction of filling the distribution chamber.

The disassembly of this apparatus is definitely simplified compared to what is known in the state of the art. In fact, at the time when one wishes to carry out its cleaning, one only needs to remove the rear 501 plug, the 721 plug that carries the 701 shutter, and ferrule 304, and it will then be possible to extract piston 2 from body 1, disassemble body 1 from the sleeve 104 of support 4, and it will also be possible to separate lever 3 from support 4 itself. The apparatus thus consists of a limited number of parts, all of which can be easily separated from each other and are easy to maintain and replace.

## Claims

1. Dosing apparatus for pasty foodstuffs, comprising a distribution chamber (101) radially provided with a delivery nozzle (601), and a radial supply conduit (301) of the pasty foodstuff upstream of said delivery nozzle (601), said nozzle being provided with closing means (701), and a piston (2), provided with actuating means (3), sliding in said distribution chamber (101) from a position of at least partial opening of said delivery nozzle (601) to a position of complete closure thereof; the means of closure (701) of said delivery nozzle being suitably loaded (711) so as to permit delivery when the stroke of the piston is in the position of complete closure of said supply conduit (301); the actuating means of the piston comprising an inter-resistant lever (3), fulcrated (224) to a support (4, 5) connected to the distribution chamber (101), and cooperating with the end of the piston (2) opposite that facing the distribution chamber, in which the end of the piston (2) cooperating by contact with a portion (303) of the outer side wall of the lever suitably shaped, by suitable sliding means (202), and in which said distribution chamber (101) is obtained longitudinally in an elongated monolithic body (1),
**characterised in that**
said distribution chamber (101) is
separated by suitable sealing means (211) from a second chamber (201), coaxial and concentric to the distribution chamber (101), in which the end of the piston (2) cooperating with the lever (3) slides, in said second chamber (201) are provided two axially formed through slits (401) facing each other, which are acting as guiding means of said lever (3), and being provided removable closing means (501) of said second chamber (201).

2. Apparatus according to the claim 1, in which the lever has the shape of an elongated plate (3), and the portion (303) of the side wall of the plate (3) cooperating with the piston (2) is formed on the thickness of said plate, basically in the shape of an arc of a circle.

3. Apparatus according to the claim 2, in which the plate (3) is formed by two flaps (103, 203) inclined at an obtuse angle, cooperating with the piston in its concavity (303).

4. Apparatus according to the claim 3, in which the flap (203) of said plate intended to be connected to the handle means (213) is shorter than the flap (103) intended to be connected to the fulcrum (224), which is connected to the distribution chamber support (4, 5).

5. Apparatus according to anyone of the preceding claims 1 to 4, in which the second chamber (201) has a larger cross-section than the distribution chamber (101), so as to accommodate the means of elastic loading (102) of the piston (2) arranged concentrically to the same and resting on the shoulder between said two chambers.

6. Apparatus according to anyone of the preceding claims 1 to 5, in which are provided means (304) that enable the connection of the supply conduit (301) to the pasty foodstuff tank, said means allowing the attachment of the monolithic body (1) to the apparatus support (4), which comprises a sleeve (104) complementary to the monolithic body and provided with a radial opening (114).

## Patentansprüche

1. Dosiervorrichtung für pastöse Nahrungsmittel, umfassend eine Verteilerkammer (101), die radial mit einer Abgabedüse (601) versehen ist, und eine radiale Zufuhrleitung (301) des pastösen Nahrungsmittels stromaufwärts von der Abgabedüse (601), wobei die Düse mit Verschlussmitteln (701) versehen ist, und einen Kolben (2), der mit Betätigungsmitteln (3) versehen ist und in der Verteilerkammer (101) von einer Position der zumindest teilweisen Öffnung der Abgabedüse (601) zu einer Position des vollständigen Verschlusses derselben gleitet; wobei die Verschlussmittel (701) der Abgabedüse in geeigneter Weise vorgespannt sind (711), um die Abgabe zu ermöglichen, wenn sich der Hub des Kolbens in der Position des vollständigen Verschlusses der Zufuhrleitung (301) befindet; wobei die Betätigungsmittel des Kolbens einen widerstandsfähigen Hebel (3) umfassen, der an einem mit der Verteilerkammer (101) verbundenen Träger (4, 5) drehbar gelagert (224) ist und mit dem Ende des Kolbens (2) zusammenwirkt, das dem der Verteilerkammer zugewandten Ende gegenüberliegt, wobei das Ende des Kolbens (2) durch Kontakt mit einem Abschnitt (303) der äußeren Seitenwand des Hebels, der durch geeignete Gleitmittel (202) geeignet geformt ist, zusammenwirkt, und wobei die Verteilerkammer (101) in Längsrichtung in einem länglichen monolithischen Körper (1) ausgebildet ist, **dadurch gekennzeichnet, dass** die Verteilerkammer (101) durch geeignete Dichtungsmittel (211) von einer zweiten Kammer (201) getrennt ist, die koaxial und konzentrisch zur Verteilerkammer (101) ist und in der das Ende des Kolbens (2), das mit dem Hebel (3) zusammenwirkt, gleitet, wobei in der zweiten Kammer (201) zwei axial geformte, einander zugewandte Durchgangsschlitze (401) vorgesehen sind, die als Führungsmittel des Hebels (3) wirken, und wobei entfernbare Verschlussmittel (501) der zweiten Kammer (201) vorgesehen sind.

2. Vorrichtung nach Anspruch 1, bei der der Hebel die Form einer länglichen Platte (3) hat und der Teil (303) der Seitenwand der Platte (3), der mit dem Kolben (2) zusammenwirkt, an der Dicke der Platte im Wesentlichen in Form eines Kreisbogens ausgebildet ist.

3. Vorrichtung nach Anspruch 2, bei der die Platte (3) durch zwei in einem stumpfen Winkel geneigte Laschen (103, 203) gebildet wird, die mit dem Kolben in seiner Konkavität (303) zusammenwirken.

4. Vorrichtung nach Anspruch 3, bei der die Klappe (203) der Platte, die mit dem Griffmittel (213) verbunden werden soll, kürzer ist als die Klappe (103), die mit dem Drehpunkt (224) verbunden werden soll, der mit dem Verteilerkammerträger (4, 5) verbunden ist.

5. Vorrichtung nach einem der vorhergehenden Ansprüche 1 bis 4, bei der die zweite Kammer (201) einen größeren Querschnitt als die Verteilerkammer (101) aufweist, um die elastische Belastungseinrichtung (102) des konzentrisch zu ihr angeordneten und auf der Schulter zwischen den beiden Kammern ruhenden Kolbens (2) aufzunehmen.

6. Vorrichtung nach einem der vorhergehenden Ansprüche 1 bis 5, bei der Mittel (304) vorgesehen sind, die die Verbindung der Versorgungsleitung (301) mit dem Behälter für pastöse Lebensmittel ermöglichen, wobei diese Mittel die Befestigung des monolithischen Körpers (1) an dem Geräteträger (4) ermöglichen, der eine zum monolithischen Körper komplementäre und mit einer radialen Öffnung (114) versehene Hülse (104) umfasst.

## Revendications

1. Appareil de dosage pour aliments pâteux, comprenant une chambre de distribution (101) pourvue radialement d'une buse de distribution (601), et un conduit d'alimentation radial (301) de l'aliment pâteux en amont de ladite buse de distribution (601), ladite buse étant pourvue de moyens de fermeture (701), et un piston (2), pourvu de moyens d'actionnement (3), coulissant dans ladite chambre de distribution (101) depuis une position d'ouverture au moins partielle de ladite buse de distribution (601) jusqu'à une position de fermeture complète de cette dernière ; les moyens de fermeture (701) de ladite buse de distribution étant convenablement chargés (711) de manière à permettre la distribution lorsque la course du piston se trouve dans la position de fermeture complète de ladite conduite d'alimentation (301) ; les moyens d'actionnement du piston comprenant un levier (3) interrésistant, fulcré (224) sur un support (4, 5) relié à la chambre de distribution (101), et coopérant avec l'extrémité du piston (2) opposée à celle tournée vers la chambre de distribution, l'extrémité du piston (2) coopérant par contact avec une portion (303) de la paroi latérale extérieure du levier convenablement formée, par des moyens de glissement appropriés (202), et ladite chambre de distribution (101) étant obtenue longitudinalement dans un corps monolithique allongé (1), **caractérisé en ce que** ladite chambre de distribution (101) est séparée par des moyens d'étanchéité appropriés (211) d'une seconde chambre (201), coaxiale et concentrique à la chambre de distribution (101), dans laquelle glisse l'extrémité du piston (2) coopérant avec le levier (3), dans ladite seconde chambre (201) sont prévues deux fentes traversantes (401) formées axialement et se faisant face, qui agissent comme moyens de guidage dudit levier (3), et étant prévues des moyens de fermeture amovibles (501) de ladite seconde chambre (201).

2. Appareil selon la revendication 1, dans lequel le levier a la forme d'une plaque allongée (3), et la partie (303) de la paroi latérale de la plaque (3) coopérant avec le piston (2) est formée sur l'épaisseur de ladite plaque, essentiellement en forme d'arc de cercle.

3. Appareil selon la revendication 2, dans lequel la plaque (3) est formée de deux pans (103, 203) inclinés à un angle obtus, coopérant avec le piston dans sa concavité (303).

4. Appareil selon la revendication 3, dans lequel le pan (203) de ladite plaque destiné à être relié à la poignée (213) est plus court que le pan (103) destiné à être relié au point d'appui (224), qui est relié au support (4, 5) de la chambre de distribution.

5. Appareil selon l'une quelconque des revendications précédentes 1 à 4, dans lequel la deuxième chambre (201) a une section plus grande que la chambre de distribution (101), de façon à loger les moyens de charge élastique (102) du piston (2) disposés concentriquement à celle-ci et reposant sur l'épaulement entre lesdites deux chambres.

6. Appareil selon l'une quelconque des revendications précédentes 1 à 5, dans lequel sont prévus des moyens (304) permettant le raccordement du conduit d'alimentation (301) au réservoir d'aliments pâteux, ces moyens permettant la fixation du corps monolithique (1) au support de l'appareil (4), qui comprend un manchon (104) complémentaire au corps monolithique et pourvu d'une ouverture radiale (114).
